# EUROPEAN PATENT APPLICATION

(11) **EP 4 574 764 A1**
(43) Date of publication of application: **25.06.2025**
(21) Application number: 24217702.0
(22) Date of filing: 05.12.2024
(51) Int. Cl.: C01C 1/04, B01J 8/02, B01J 19/12, B01J 21/18, B01J 27/24, B01J 35/33, F16K 21/04

(54) **AMMONIA SYNTHESIS SYSTEM INCLUDING CATALYST BED CONTAINING MICROWAVE REACTIVE CATALYST MIXTURE**

(30) Priority: 22.12.2023 KR 20230189623
(71) Applicant: SK Innovation Co., Ltd., Seoul 03188 (KR)
(72) Inventor: LEE, Jun Young, 34124 Daejeon (KR); SONG, Da Eun, 34124 Daejeon (KR); IM, Ju Hwan, 34124 Daejeon (KR); JEONG, Jae Hun, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

Provided is an ammonia synthesis system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of mixed gas; a distribution device disposed upstream from each of the two or more catalyst beds for distributing the mixed gas to the catalyst bed; mixed gas supply lines arranged to supply the mixed gas to each distribution device; and a microwave heating device for emitting microwaves to each of the two or more catalyst beds, wherein the catalyst bed contains a microwave reactive catalyst mixture including a catalyst and a carbon body.

## Description

### TECHNICAL FIELD

The following disclosure relates generally to an ammonia synthesis system and, more particularly, to an ammonia synthesis system including a catalyst bed comprising a microwave reactive catalyst mixture.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find ways and means for storing and transporting renewable energy. For example, renewable energy, which is abundant in the equatorial and southern hemisphere areas, is required to be transported to the northern hemisphere where renewable energy is less present, but highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and a pressure of 8.5 atmospheres or lower, and thus be stored and transported more easily than hydrogen. Therefore, as an alternative to solve the problems occurring from the area ubiquity and temporal variability of renewable energy, there is a need for synthesizing ammonia from hydrogen and nitrogen using electricity produced from renewable energy.

For example, hydrogen, one of the main raw materials for the ammonia synthesis, may be produced by a water electrolyzer powered by renewable energy such as solar or wind energy. One issue that needs to be addressed is that renewable energy, such as, for example, solar energy or wind energy are not constant or available at all times. Therefore, the amount of hydrogen (e.g., flow rate) provided by a process using renewable solar or wind energy may vary or fluctuate significantly and, hence, an ammonia synthesis system using such hydrogen cannot be operated at a constant flow rate. Such changes may have a negative impact on the overall efficiency of the ammonia synthesis system.

In addition, a flow rate distribution upstream of a catalyst bed included in an ammonia synthesis reactor may become non-uniform when a flow rate of the raw material / reactant such as hydrogen fed into the ammonia synthesis system decreases or increased.

In addition, in a conventional ammonia synthesis system, a temperature deviation may occur between the central and outer parts of the catalyst bed especially at the beginning of its operation, which may reduce an ammonia synthesis yield.

Therefore, there is a need for an ammonia synthesis system which can operate efficiently with hydrogen from a renewable energy process. The ammonia synthesis system will need to be able to cope with the changes in the flow rate that occurs during the production cycle, while solving the problems of the non-uniform flow rate distribution that occurs upstream of the catalyst bed and the reduced ammonia synthesis yield caused by the temperature deviation ind or between the central and outer parts of the catalyst bed at the beginning of the operation.

### SUMMARY

An embodiment of the present disclosure is directed to providing an ammonia synthesis system which may cope with significant changes in a raw material flow rate that occur during a production cycle.

Another embodiment of the present disclosure is directed to providing an ammonia synthesis system which may maintain a uniform flow rate distribution upstream of a catalyst bed included in an ammonia synthesis reactor even when a flow rate of a raw material / reactant, such as hydrogen, fed into the ammonia synthesis system is decreased or even substantially decreased.

Still another embodiment of the present disclosure is directed to providing an ammonia synthesis system which may improve an ammonia synthesis yield by enabling a temperature deviation between the central and outer parts of a catalyst bed to be reduced or elimintated and a more uniform or uniform temperature to be established at the beginning of its operation.

An embodiment of the present disclosure is directed to providing an ammonia synthesis system which may improve an ammonia synthesis yield at the beginning of its operation by preheating a catalyst bed at the beginning of its operation.

Another embodiment of the present disclosure is directed to providing an ammonia synthesis system which may save energy by optimizing an amount of energy required by the system during its operation.

Another embodiment of the present disclosure is directed to providing an ammonia synthesis system which may increase a catalyst replacement cycle by uniformly using each catalyst bed during the operation.

Another embodiment of the present disclosure is directed to providing a catalyst mixture having excellent microwave reactivity when synthesizing ammonia.

Another embodiment of the present disclosure is directed to providing a catalyst mixture having an improved heating feature and ammonia synthesis yield upon microwave emission.

In one embodiment of the present disclosure there is provided an ammonia synthesis system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of mixed gas; a distribution device disposed upstream from each of the two or more catalyst beds for distributing the mixed gas to the catalyst bed; mixed gas supply lines arranged to supply the mixed gas to each distribution device; and a microwave heating device for emitting microwaves to each of the two or more catalyst beds, wherein the catalyst bed contains a microwave reactive catalyst mixture including a catalyst and a carbon body.

The microwave reactive catalyst mixture may be prepared by mixing the catalyst with the carbon body.

The microwave reactive catalyst mixture may have a form of pellets or granules.

The microwave reactive catalyst mixture may include the catalyst and the carbon body in a weight ratio of 0.5:1 to 10:1.

The carbon body may include at least one selected from the group consisting of carbon nanotubes, fullerenes, graphite, graphene, carbon black, ketjen black, and carbon fibers.

The catalyst may include at least one selected from the group consisting of ruthenium (Ru) and cesium (Cs) as a catalytically active component. The catalyst may also include, a catalyst support for supporting the active compound. The catalyst support may be at least one selected from the group consisting of cerium oxide, lanthanum oxide, vanadium oxide, magnesium oxide, aluminum oxide, zirconium oxide, tungsten oxide, and titanium oxide.

The microwave reactive catalyst mixture may further include silicon carbide (SiC).

The system may further include distribution plates, each distribution plate being disposed between a catalyst bed and its distribution device.

The system may further include a plurality of mixed gas flow pipes which are fixed to a lower surface of the distribution plate and through which the mixed gas flows.

The mixed gas flow pipe may have a bottom surface and a side surface connecting the bottom surface with the distribution plate, a plurality of upper openings may be formed in a side surface of an upper part of the mixed gas flow pipe spaced apart from each other along a circumference of the pipe, a plurality of middle openings may be formed in a side surface of a middle part of the mixed gas flow pipe spaced apart from each other along the circumference, a plurality of lower openings may be formed in a side surface of a lower part of the mixed gas flow pipe spaced apart from each other along the circumference, and the mixed gas flow pipe may include a cover surrounding at least some regions of the side surface of the mixed gas flow pipe to provide a space for a fluid flowing out of the side surface of the mixed gas flow pipe after passing through the upper opening to be guided toward the middle opening.

The mixed gas flow pipe may further include a separator plate dividing the upper and middle parts of the mixed gas flow pipe from each other.

Each of the mixed gas supply lines may include a flow regulating device.

Each of the backflow prevention plates may include a plurality of openings, and each of the plurality of openings included in each of the backflow prevention plates may have a backflow prevention cap selectively opened based on a flow direction of the gas.

The backflow prevention cap may be coupled to a hinge disposed at a position on each circumference part of the plurality of openings included in each of the backflow prevention plates.

A coupling part of the hinge that is coupled to the hinge may include a spring to apply an elastic force in a direction in which the backflow prevention cap approaches the distribution plate.

The distribution device may have a disk shape or a toroidal shape.

In a further aspect, a method for ammonia synthesis is provided, in which method the ammonia synthesis system disclosed herein is used.

In a respective ammonia synthesis system or method, ammonia may be synthesized in the ammonia synthesis system at 1 to 300 bar.

Ammonia may be synthesized in the ammonia synthesis system or method at 200 to 700°C.

The system may further include a heat exchanger disposed downstream from each of the two or more catalyst beds to remove heat from an effluent of the catalyst bed.

In one embodiment, provided is an ammonia synthesis system comprising: a mixed gas supply line providing mixed gas including hydrogen generated from a process using renewable energy to an ammonia synthesis reactor; the ammonia synthesis reactor; a first and a second catalyst bed included in the ammonia synthesis reactor; a first backflow prevention plate disposed downstream from the first catalyst bed for preventing a backflow of mixed gas; a first distribution device disposed upstream from the first catalyst bed for distributing a mixed gas feed to the first catalyst bed; a second distribution device disposed upstream from the second catalyst bed for distributing a mixed gas flow exiting the first catalyst bed to the second catalyst bed; and first and second microwave heating devices for emitting microwaves to the first and second catalyst beds respectively, wherein the first and second catalyst beds include a microwave reactive catalyst mixture including a catalyst and a carbon body, wherein the mixed gas supply line includes first and second mixed gas supply lines arranged to supply mixed gas feed to the first and/or the second distribution devices respectively depending upon a flow rate of the mixed gas flow.

In a further independent aspect, the microwave reactive catalyst mixture, which includes the catalyst with the carbon body, and which optionally may be characterized by the particular materials disclosed herein, may be used in ammonia synthesis systems and methods generally.

Other features and aspects will be apparent from the following detailed description, the drawings, and the claims.

### BRIEF DESCRIPTION OF THE DRAWINGS

FIG. 1 is a schematic side cross-sectional view showing an ammonia synthesis system according to an embodiment of the present disclosure.
FIG. 2 is a schematic side cross-sectional view showing an ammonia synthesis system according to another embodiment of the present disclosure.
FIG. 3 is a perspective view of a distribution plate with a plurality of mixed gas flow pipes according to an embodiment of the present disclosure.
FIG. 4 is a perspective view showing the inside of the mixed gas flow pipe according to an embodiment of the present disclosure.
FIG. 5 is a perspective view showing the inside of a mixed gas flow pipe according to another embodiment of the present disclosure.
FIG. 6 is a schematic side cross-sectional view showing a backflow prevention cap of a backflow prevention plate in a closed position according to an embodiment of the present disclosure.
FIG. 7 is a schematic side cross-sectional view showing the backflow prevention cap of the backflow prevention plate in an opened position according to an embodiment of the present disclosure.

### DETAILED DESCRIPTION

Various advantages and features of the present disclosure and methods for accomplishing the same will become apparent to the skilled person of the art from the embodiments and examples described in detail below. However, it is noted that the embodiments of the present disclosure are not limited only to the embodiments and examples disclosed below, and may be implemented in various different forms. These embodiments and examples are provided only for making the present disclosure complete and for allowing those skilled in the art to fully appreciate the scope of the present disclosure as defined by the claims.

Unless defined otherwise, all terms (including technical and scientific terms) used in the specification have the same meanings as meanings commonly understood by those skilled in the art to which the present disclosure pertains.

Terms of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower" or "lowest" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or less" unless otherwise specifically defined.

In the specification, "microwave reactivity" indicates a feature that a heating rate of a catalyst bed temperature is increased, an ammonia synthesis rate is increased, or the heating rate of the catalyst bed temperature and the ammonia synthesis rate are increased when a microwaves are emitted to the catalyst bed.

Hereinafter, an ammonia synthesis system of the present disclosure is described in detail. However, the embodiments are only illustrative, and the present disclosure is not limited to the specific embodiments described herein.

One embodiment of the present disclosure may provide an ammonia synthesis system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds, for preventing a backflow of mixed gas; a distribution device disposed upstream from each of the two or more catalyst beds for distributing the mixed gas to the catalyst bed; mixed gas supply lines arranged to supply the mixed gas to each distribution device; and a microwave heating device for emitting microwaves to each of the two or more catalyst beds, wherein the catalyst bed contains a microwave reactive catalyst mixture including a catalyst and a carbon body.

The ammonia synthesis system of the present disclosure may provide a catalyst mixture having excellent microwave reactivity when synthesizing ammonia. In addition, the ammonia synthesis system of the present disclosure may provide a catalyst mixture having an improved ammonia synthesis yield upon the microwave emission.

The microwaves may selectively heat an active portion on a catalyst surface compared to a conventional thermal heating method of heating the catalyst through conduction or convection heating. Selective heating of the microwaves may significantly reduce various reaction conditions such as temperature, pressure, time, and activation energy. In addition, the carbon body has π electrons in a sp² hybridized carbon network, and the presence of these free electrons may assist the carbon body to absorb microwave energy and be heated efficiently. That is, the microwaves may be emitted to the catalyst bed containing the microwave reactive catalyst mixture including the catalyst and the carbon body when synthesizing ammonia, thereby not only shortening the time needed for preheating the catalyst bed but also improving the ammonia synthesis yield.

According to an embodiment of the present disclosure, the microwave reactive catalyst mixture may be a mixture of the catalyst and the carbon body. The microwave reactive catalyst mixture may improve its heating feature and ammonia production yield when the catalyst and the carbon body are mechanically mixed with each other. This excellent effect of the mixture may be due to its improved dielectric property. In addition, due to a synergistic effect of the catalyst and the carbon body, an interfacial polarization at an interface of the catalyst mixture may be increased, thereby improving its overall heating feature and ammonia production rate.

According to an embodiment of the present disclosure, the microwave reactive catalyst mixture may be prepared by mechanically mixing the catalyst with the carbon body. In addition, the microwave reactive catalyst mixture may also be synthesized through co-precipitation, hydrothermal reaction, or similar mixture procedures of the catalyst and the carbon body. It is noted, however, that the embodiments may not be limited by the method of preparing the microwave reactive mixture.

The microwave reactive catalyst mixture having a different weight may be included in each of the catalyst beds. For example, if the reactor 10 has three catalyst beds, then a larger weight microwave reactive catalyst mixture may be included in the catalyst bed disposed at the middle than in the catalyst bed disposed at the top, and a larger weight microwave reactive catalyst mixture may be included in the catalyst bed disposed at the bottom than in the catalyst bed disposed at the middle. However, this configuration is only an example, and a weight of the microwave reactive catalyst mixture included in each catalyst bed may be changed based on its reaction and operating conditions. The weight of the microwave reactive catalyst mixture included in each of the catalyst beds may be changed based on the arrangement type or number of the microwave heating devices. A larger weight microwave catalyst mixture may be added in a lower catalyst bed than an upper catalyst bed.

According to an embodiment of the present disclosure, the microwave reactive catalyst mixture may have a form of pellets or granules, is not limited thereto, and may be included in the catalyst bed while having another form.

According to an embodiment of the present disclosure, the microwave reactive catalyst mixture may include the catalyst and the carbon body in a weight ratio of 0.1:1 to 50:1, 0.5:1 to 10:1 or 1:1 to 5:1, and is not limited thereto.

In addition, the weight ratio of the catalyst and the carbon body in the microwave reactive catalyst mixture included in a catalyst bed may not be fixed and may be changed as the mixture is further away from the center of the catalyst bed in horizontal and vertical directions. For example, the weight ratio may be changed so that the mixture includes more catalyst than the carbon body as the mixture is further away from the center of the catalyst bed in the horizontal direction, and the weight ratio may be changed so that the mixture includes more carbon body than catalyst as the mixture is further away from the center of the catalyst bed in the horizontal direction. However, this configuration is only an example, and the weight ratio of the microwave reactive catalyst mixture may be changed as the microwave reactive catalyst mixture is further away from the center of the catalyst bed based on its reaction condition and operating condition. The weight ratio of the microwave reactive catalyst mixture may be changed based on the arrangement type or number of the microwave heating devices.

According to an embodiment of the present disclosure, the carbon body may include at least one selected from the group consisting of carbon nanotubes, fullerenes, graphite, graphene, carbon black, ketjen black, and carbon fibers, and is not limited thereto. For example, in an embodiment, the carbon body may comprise carbon nanotubes. The carbon body may have π electrons in an sp² hybridized carbon network, and the presence of these free electrons may assist the carbon body to absorb microwave energy and be heated efficiently. That is, the microwaves may be emitted to the catalyst bed containing the microwave reactive catalyst mixture including the catalyst and the carbon body when synthesizing ammonia, thereby not only shortening the time for preheating the catalyst bed but also improving the ammonia synthesis yield.

According to an embodiment of the present disclosure, the catalyst may include at least one selected from the group consisting of ruthenium (Ru) and cesium (Cs) as a catalytically active component.

According to an embodiment of the present disclosure, the catalyst may include, as a catalyst support, at least one selected from the group consisting of cerium oxide, lanthanum oxide, vanadium oxide, magnesium oxide, aluminum oxide, zirconium oxide, tungsten oxide, and titanium oxide, and is not limited thereto. For example in an embodiment, the catalyst may include cerium oxide as the catalyst support.

In an embodiment, the catalyst may include at least one selected from the group consisting of ruthenium (Ru) and cesium (Cs) as the catalytically active component, and include cerium oxide as the catalyst support. The catalyst configured in this way may show particularly excellent microwave reactivity.

According to an embodiment of the present disclosure, the microwave reactive catalyst mixture may further include silicon carbide (SiC). It has been found, rather unexpectedly, that adding to the microwave reactive catalyst mixture silicon carbide may further improve the microwave reactivity. That is, the mixture may have an improved heating feature and increased ammonia production yield because of the microwave emission heating. Silicon carbide may be included in the microwave reactive catalyst mixture to be disposed in the catalyst bed. Silicon carbide may also be used to cover an outer surface of the reactor. The silicon carbide further improves microwave heating.

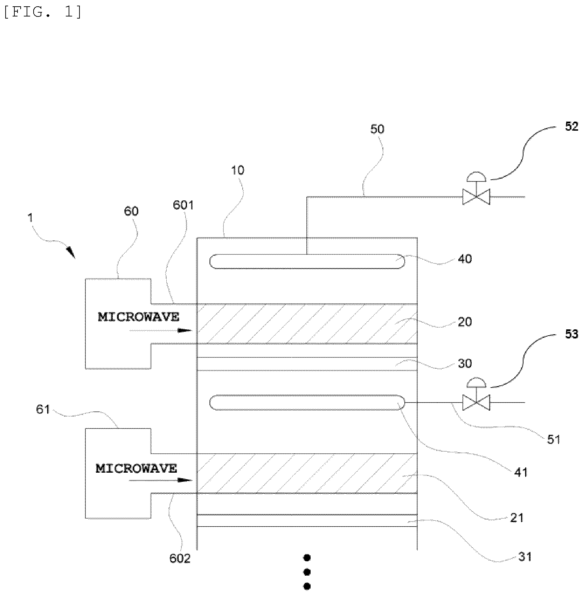

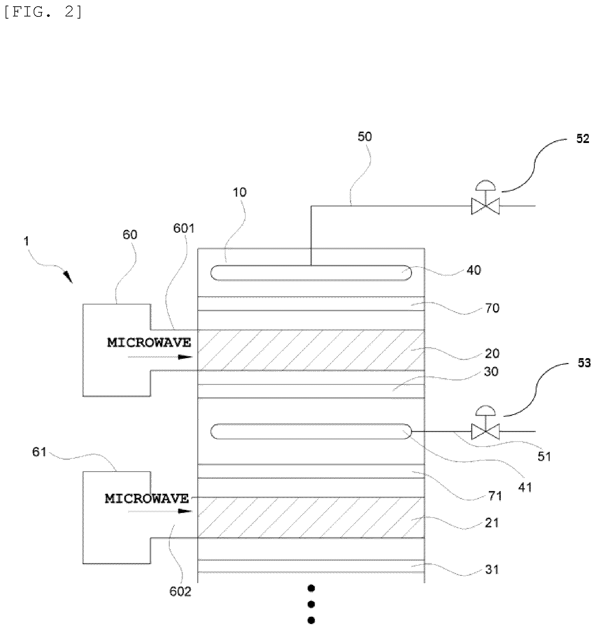

Referring to FIGS. 1 and 2, according to an embodiment of the present disclosure, there is provided is an ammonia synthesis system 1 including an ammonia synthesis reactor 10 including two or more catalyst beds 20 and 21. Backflow prevention plates 30 or 31 may be disposed downstream from each of the catalyst beds for preventing the backflow of the mixed gas. Distribution devices 40 or 41 may be disposed each one upstream from each of the two or more catalyst beds 20 and 21 for distributing the mixed gas to the respective catalyst bed 20 or 21. The system may further include mixed gas supply lines 50 and 51 arranged to supply the mixed gas to each distribution device 40 or 41, and microwave heating devices 60 or 61 for heating by emitting microwaves to each one of the two or more catalyst beds 20 and 21.

Backflow prevention plates 30 or 31 may be disposed downstream from each of the catalyst beds, optionally except for the catalyst bed 21 disposed at the lowest of the two or more catalyst beds.

Hereinafter, the ammonia synthesis system 1 may be described with an example including two catalyst beds may be an example of the ammonia synthesis system 1. However, the ammonia synthesis system according to an embodiment of the present disclosure may include multiple, i.e. two or more, for example, three, four, five, six, seven, eight, nine, or ten catalyst beds. This is indicated by the dotted lines in Figs. 1 and 2, noting that corresponding components like microwave heating device, mixed gas supply lines, flow regulating devices, distribution devices, backflow prevention plates (optionally except for the catalyst bed disposed at the lowest of the two or more catalyst beds) may independently be provided for each or some of the multiple catalyst beds.

The ammonia synthesis system according to an embodiment of the present disclosure may cope with a change in the flow rate that occurs during the production cycle by including the mixed gas supply line to supply the mixed gas to each of the two or more catalyst beds. For example, the ammonia synthesis system may be operated by feeding the gas through the mixed gas supply line 50 disposed at the top for the gas to first pass through the catalyst bed 20 disposed at the top of the reactor 10 when the flow rate of the raw material / reactant feed is high, and operated by feeding the gas through the mixed gas supply line 51 disposed at the bottom for the gas to pass through the catalyst bed 21 disposed at the bottom of the reactor 10 rather than the catalyst bed 20 disposed at the top when the flow rate of the fed raw material / reactants is low. Here, the backflow of the mixed gas may be prevented by the backflow prevention plate 30 when the mixed gas is fed through the mixed gas supply line 51 disposed at the bottom to pass through the catalyst bed 21 disposed at the bottom.

The flow rate that can be changed during the production cycle may be classified into three levels, or categories for convenience. As described above, the raw material / reactant flow rate may be classified into a low flow rate, a medium flow rate, and a high flow rate. However, the change in the flow rate may be easily regulated by the common sense or judgment of those skilled in the art. The low flow rate case indicates a case where the flow rate of the mixed gas feed flow results in an ammonia produced is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), but the embodiments are not limited thereto.

In the low flow rate case as described above, there is no need to maintain a temperature of the entire reactor because the ammonia synthesis system may be operated by feeding the mixed gas through the mixed gas supply line 51 disposed at the bottom for the gas to pass through the catalyst bed 21 disposed at the bottom. Therefore, the energy consumption may be reduced by optimizing an amount of energy required by the system during its operation.

In addition, the ammonia synthesis system may increase the catalyst or catalyst mixture replacement cycle by using each catalyst bed more uniformly during its operation. In general, when a reaction fluid has the low flow rate, distribution performance at the top of the catalyst bed may be reduced, which may cause the catalyst disposed even at the same height to have a different reaction performance. The catalyst or catalyst mixture replacement cycle may be determined by the reaction performance at the bottom of the catalyst bed, and the replacement cycle may become shorter if the reaction performance at some regions at the bottom of the catalyst bed is lowered due to lower distribution performance caused by the reduced flow rate. However, the catalyst or catalyst mixture replacement cycle may be increased by relatively uniformly using the catalyst beds if a height of the catalyst bed through which the gas passes is changed based on the flow rate, and the distribution performance of each catalyst bed is improved, as in the ammonia synthesis system according to the present disclosure.

In addition, the ammonia synthesis system according to an embodiment of the present disclosure may include the microwave heating devices 60 and 61 to enable temperature deviation between the central and outer parts of the catalyst bed to be reduced or eliminated resulting in a uniform temperature along the catalyst bed at the beginning of its operation, thereby improving the ammonia synthesis yield. For example, the microwave heating device may enable the temperature deviation between the central and outer parts of the catalyst bed to be eliminated and the temperature may become uniform by emitting the microwaves to the catalyst bed at the beginning of the operation. In addition, the microwave heating device may improve the ammonia synthesis yield at the beginning of the operation by preheating the catalyst bed that is not sufficiently preheated at the beginning of the operation.

For example, when the fed raw material / reactants has / have the low flow rate, the ammonia synthesis system may be operated for the gas to pass through the catalyst bed 21 disposed at the bottom rather than the catalyst bed 20 disposed at the top. Hence, the mixed gas may not be fed into the catalyst bed 20 disposed at the top, and a temperature of the catalyst bed 20 disposed at the top may thus be decreased over time. If the catalyst bed 20 disposed at the top is used again after this decrease, the ammonia synthesis efficiency may be lower because the temperature of the catalyst bed 20 disposed at the top is decreased. Here, the catalyst bed 20 disposed at the top, which has the lower temperature, may be preheated by the microwaves emitted by the microwave heating device, thus achieving excellent ammonia synthesis efficiency even when the catalyst bed is used again for the operation after it was taken off line during the low flow rate operation.

The catalyst bed may contain the microwave reactive catalyst mixture including the catalyst and the carbon body. In this case, the microwave reactive catalyst mixture may be suitable to absorb the microwaves more efficiently, thereby not only shortening the time for preheating the catalyst bed but also improving the ammonia synthesis yield.

One or more, two or more, three or more, four or more, five or more, six or more, seven or more, or eight or more microwave heating devices may be installed on each catalyst bed, and the number of microwave heating devices is not limited thereto. The number of the microwave heating devices may be increased based on a size of the reactor, and an installation location of the microwave heating device may be adjusted for efficient microwave emission.

The ammonia synthesis system may further include microwave guides 601 and 602. The microwave guide may enable the microwaves emitted by the microwave heating device to reach the catalyst bed more efficiently. The shape or installation location of the guides may be changed, amongst other considerations, based on a microwave waveform.

In an embodiment according to the present disclosure, the number of catalyst beds may be one or more. In an embodiment according to the present disclosure, the number of catalyst beds may be one or more, two or more, three or more, four or more, five or more, six or more, seven or more, eight or more, nine or more, ten or more, twenty or fewer, ten or fewer, nine or fewer, eight or fewer, seven or fewer, six or fewer, five or fewer, four or fewer, three or fewer, two or fewer, or one, or a value between these values. The number of catalyst beds and the number of distribution devices may be the same as each other.

In an embodiment according to the present disclosure, the mixed gas may include at least one selected from the group consisting of hydrogen and nitrogen.

Hydrogen may be produced by a device powered by renewable energy. In detail, hydrogen may be produced by a water electrolyzer powered using renewable energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at the constant flow rate. That is, there is a need for the ammonia synthesis system which may cope with the change in the flow rate that occurs during the production cycle due to the temporal variability of renewable energy.

In addition, the mixed gas supplied through the mixed gas supply line 50 or 51 may have a low temperature. Therefore, the mixed gas supplied through the mixed gas supply line 50 or 51 may function as cooling mixed gas, and may also function as a means of cooling the mixed gas flowing in the ammonia synthesis system. For example, the mixed gas having the low temperature may be used as the cooling means to cool the mixed gas fed into the catalyst bed.

The ammonia synthesis system according to an embodiment of the present disclosure may further include distribution plates 70 and 71 each disposed between each one of the catalyst beds 20 or 21 and its respective distribution device 40 or 41.

In addition, the ammonia synthesis system according to an embodiment of the present disclosure may further include a plurality of mixed gas flow pipes 720 which are fixed to a lower surface 72 of the distribution plate 70 or 71 and through which the mixed gas flows.

The ammonia synthesis system may further include the distribution plate and the mixed gas flow pipe, thereby maintaining the uniform flow rate distribution upstream of the catalyst bed included in the ammonia synthesis reactor even when the flow rate of the fed raw material / reactant such as hydrogen is reduced.

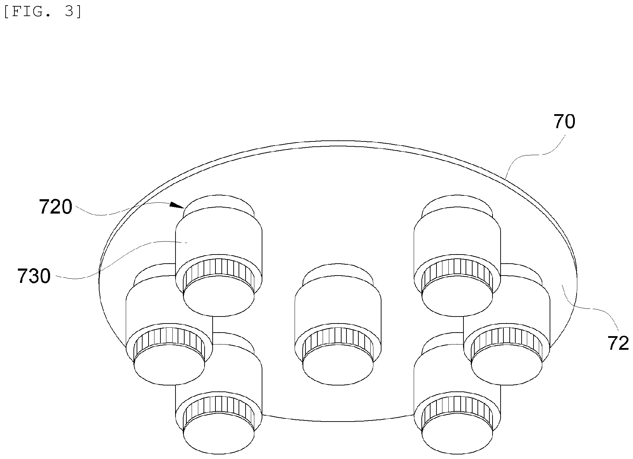

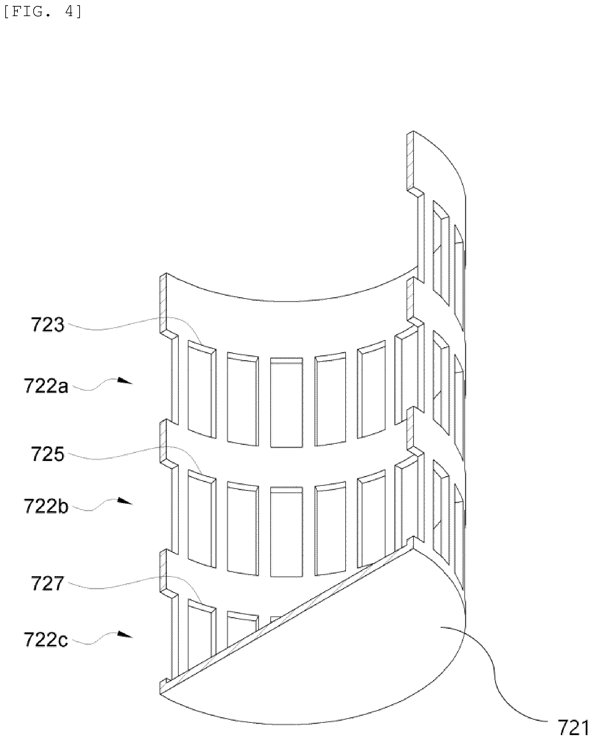

Referring to FIGS. 3 and 4, the mixed gas flow pipe 720 may have a bottom surface 721 and a side surface 722 connecting the bottom surface with the distribution plate.

A plurality of upper openings 723 may be formed in a side surface of an upper part 722a of the mixed gas flow pipe 720 spaced apart from each other along a circumference of upper part 722a of the mixed gas flow pipe 720, a plurality of middle openings 725 may be formed in a side surface of a middle part 722b of the mixed gas flow pipe 720 spaced apart from each other along the circumference of the middle part 722b of the mixed gas flow pipe 720, and a plurality of lower openings 727 may be formed in a side surface of a lower part 722c of the mixed gas flow pipe 720 spaced apart from each other along the circumference of the lower part 722c of the mixed gas flow pipe 720. A flow of the mixed gas may be formed through the upper opening 723, the middle opening 725, and the lower opening 727. The mixed gas flow pipe 720 may include a cover 730 surrounding at least some regions of the side surface of the mixed gas flow pipe 720 to provide a space for the fluid flowing out of the side surface of the mixed gas flow pipe 720 after passing through the upper opening 723 to be guided toward the middle opening 725. The cover 730 may surround at least one selected from the group consisting of the upper and middle parts of the side surface of the mixed gas flow pipe 720.

The cover 730 may cause the fluid flowing out of the side surface of the mixed gas flow pipe 720 after passing through the upper opening 723 to be guided toward the middle opening 725. This configuration may form a flow in which the fluid is moved to the outside of the side surface of the mixed gas flow pipe 720 and then moved back to the inside of the side surface of the mixed gas flow pipe 720. Through this meander-shape flow path, the fluids may be mixed more effectively and smoothly with each other due to turbulence ceation and a longer flow path alon which mixing occurs. Better mixing is highly beneficial because it can increase the reaction rate and overall business efficiency. Better mixing can also improve catalyst utilization and reduce catalyst hot spots.

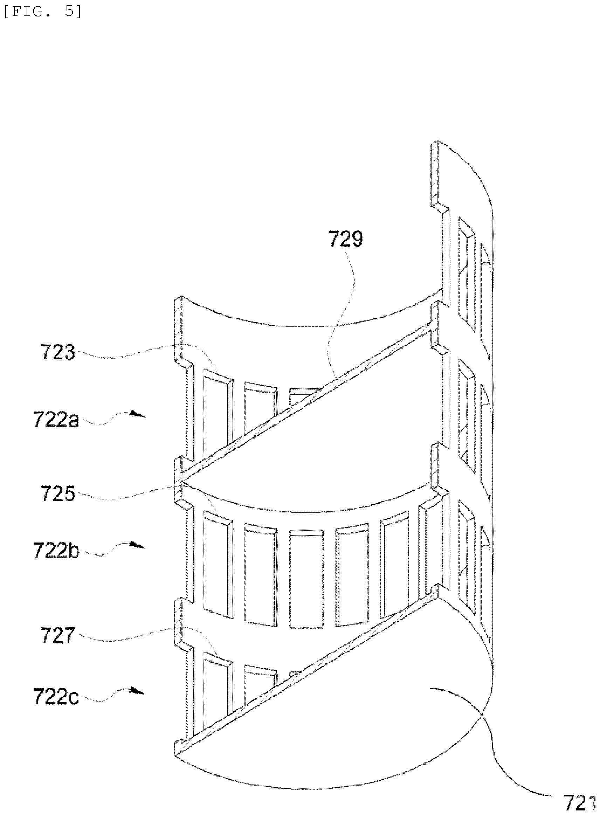

Referring to FIG. 5, the mixed gas flow pipe 720 may further include a separator plate 729 dividing the upper and middle parts of the mixed gas flow pipe 720 from each other. The separator plate 729 may completely separate the upper and middle parts of the mixed gas flow pipe 720 from each other to prevent the movement of the fluid. More specifically, the separator plate forces the fluid flow of the mixed gas which enters a mixed gas flow pipe 720 to exit the upper part of the mixed gas flow pipe 720 through the upper openings 723 into the side space created by the cover 730 and then back into the middle part of the mixed gas flow pipe 720 through the middle openings 725. Therefore, the fluid flowing into the upper part of the mixed gas flow pipe 720 may flow out through the upper opening 723 into the space between the mixed gas flow pipe 720 and the cover 730 rather than descending directly to the middle part, by the separator plate 729. The fluid in the space may then flow into the mixed gas flow pipe through the middle openings 725, descend downwards, and flow out of the mixed gas flow pipe 720 through the lower openings 727. The fluid in the lower part of the mixed gas flow pipe 720 may not exit via the bottom surface 721 of the mixed gas flow pipe 720 and is forced to exit via the lower openings 727. As described above, the fluid may form the flow in which the fluid flows out of the mixed gas flow pipe 720, flows back into the inside of the pipe, and flows out of the pipe again, thereby mixing the fluids more effectively and smoothly, and maintaining the uniform flow rate distribution upstream of the catalyst bed. The distribution plates with the plurality of the mixed gas flow pipes provide effective mixing of the hydrogen and nitrogen of the mixed gas in a passive and consistent way without any moving mechanical parts. In an embodiment according to the present disclosure, each of the mixed gas supply lines 50 and 51 may include a flow regulating device 52 and 53. The flow regulating device may enable the flow rate of the mixed gas to be controlled independently in each of the mixed gas supply lines. For example, the flow regulating device may independently regulate the flow rate of the mixed gas flowing through each of the mixed gas supply lines for the flow rate of the mixed gas entering the distribution device to be maintained within a desired flow rate range. The flow regulating device may be a flow regulating valve. The flow regulating device 52, 53 may include a plurality of flow regulating valves, e.g., one for each mixed gas supply line 50, 51 to each distributor plate 40, 41.

In an embodiment according to the present disclosure, each of the mixed gas supply lines 50 and 51 may branch from one main supply line (not shown). Alternatively, each of the mixed gas supply lines 50 and 51 may receive at least one gas selected from the group consisting of nitrogen and hydrogen from each of individual supply lines.

In an embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to the present disclosure may include the backflow prevention plate 30 or 31 having the backflow prevention cap 303, thereby preventing the backflow of the mixed gas even when the mixed gas is fed through the mixed gas supply line 51 disposed at the bottom to pass through the catalyst bed 21 disposed at the bottom. In addition, the system may be implemented to prevent the backflow of the mixed gas as described above to thus save the energy by optimizing the amount of energy required by the system during its operation, and increase the catalyst replacement cycle by using each catalyst bed uniformly.

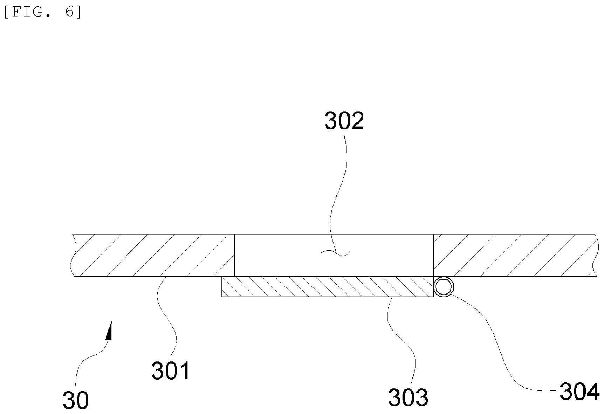

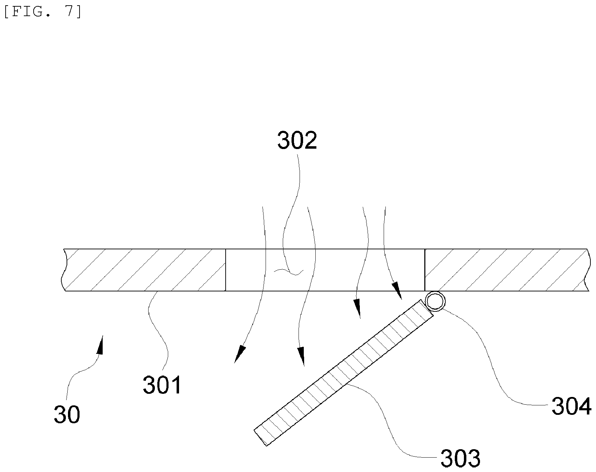

Referring to FIGS. 6 and 7, the backflow prevention cap 303 may be coupled to a hinge 304 disposed at a position on each circumference part of the plurality of openings 302 included in each of the backflow prevention plates 30 and 31. FIG. 7 shows a state where the backflow prevention cap 303, which is coupled to the hinge 304, is opened. When the mixed gas flows from the upstream to downstream of the backflow prevention plate 30 or 31, the backflow prevention cap 303 may be maintained to be opened, and the mixed gas may thus flow normally. FIG. 6 shows a state where the backflow prevention cap 303, which is coupled to the hinge 304, is closed. When the mixed gas is to flow from the downstream to upstream of the backflow prevention plate 30 or 31, the backflow prevention cap 303 may be closed by the flow of the mixed gas flowing from the downstream to the upstream. By this principle, the backflow prevention plate 30 or 31 according to the present disclosure may prevent the backflow of the mixed gas.

In an embodiment according to the present disclosure, a coupling part of the hinge 304 that is coupled to the hinge 304 may include a spring to apply an elastic force in a direction in which the backflow prevention cap 303 approaches the distribution plate.

In an embodiment according to the present disclosure, the distribution device 40 or 41 may have a disk shape. In another embodiment according to the present disclosure, the distribution device 40 or 41 may have a toroidal shape. However, the embodiments are not limited to these shapes only, and generally any conventional gas distribution device may be used.

In a respective ammonia synthesis system according to an embodiment of the present disclosure, and in a method using an ammonia synthesis system according to the present disclosure, ammonia may be synthesized at 1 to 500 bar or 10 to 300 bar.

In addition, in the ammonia synthesis system and method according to an embodiment of the present disclosure, ammonia may be synthesized at 100 to 800°C or 200 to 700°C.

The ammonia synthesis system according to an embodiment of the present disclosure may further include a heat exchanger disposed downstream from the catalyst bed to remove heat from an effluent of the catalyst bed. The heat exchanger may surround the catalyst bed or its surroundings. The ammonia synthesis system according to the present disclosure may include an additional heat removal means other than the supply of the cooling mixed gas by further including the heat exchanger. This embodiment may enable the flexible operation of the ammonia synthesis system.

As set forth above, the ammonia synthesis system according to an embodiment of the present disclosure may cope with the change in the flow rate that occurs during the production cycle.

The mixed gas distribution system and the ammonia synthesis system according to another embodiment of the present disclosure may maintain the uniform flow rate distribution upstream of the catalyst bed included in the ammonia synthesis reactor even when the flow rate of the raw material / reactant(s), such as hydrogen, fed into the ammonia synthesis system is decreased.

The mixed gas distribution system and the ammonia synthesis system according to an embodiment of the present disclosure may achieve excellent mixing efficiency of hydrogen and nitrogen, which are the reactants for synthesizing ammonia.

The ammonia synthesis system according to another embodiment of the present disclosure may improve the ammonia synthesis yield by enabling the temperature deviation in / between the central and outer parts of the catalyst bed to be eliminated and a uniform temperature to be obtained at the beginning of its operation.

The ammonia synthesis system according to an embodiment of the present disclosure may improve the ammonia synthesis yield at the beginning of its operation by preheating the catalyst bed at the beginning of its operation.

The ammonia synthesis system according to an embodiment of the present disclosure may save the energy by optimizing the amount of energy required by the system during its operation.

The ammonia synthesis system according to an embodiment of the present disclosure may increase the catalyst replacement cycle by uniformly using each catalyst bed during the operation.

The ammonia synthesis system according to an embodiment of the present disclosure may provide the catalyst mixture having excellent microwave reactivity when synthesizing ammonia.

The ammonia synthesis system according to an embodiment of the present disclosure may provide the catalyst mixture having an improved heating feature and ammonia synthesis yield upon the microwave emission.

The ammonia synthesis system according to an embodiment of the present disclosure may synthesize ammonia in the eco-friendly manner.

The embodiments described above are only an example to which a principle of the present disclosure is applied, and may further include other embodiments or modification of the described embodiments within the scope of the present disclosure as defined in the appended claims. Furthermore, the embodiments may be combined to form additional embodiments.

## Claims

1. An ammonia synthesis system comprising:
an ammonia synthesis reactor (10);
two or more catalyst beds (20, 21) included in the ammonia synthesis reactor (10);
a backflow prevention plate (30, 31) disposed downstream from each of the catalyst beds (20, 21), optionally except for the catalyst bed disposed at the lowest of the two or more catalyst beds, for preventing a backflow of mixed gas;
a distribution device (40, 41) disposed upstream from each of the two or more catalyst beds (20, 21) for distributing the mixed gas to the catalyst bed (20, 21);
mixed gas supply lines (50, 51) arranged to supply the mixed gas to each distribution device (40, 41); and
a microwave heating device (60, 61) for emitting microwaves to each of the two or more catalyst beds (20, 21),
wherein the catalyst bed (20, 21) contains a microwave reactive catalyst mixture including a catalyst and a carbon body.

2. The system according to claim 1, wherein the microwave reactive catalyst mixture is a mixture of the catalyst and the h the carbon body.

3. The system according to claim 1 or 2, wherein the microwave reactive catalyst mixture has a form of pellets or granules.

4. The system according to one of claims 1 to 3, wherein the microwave reactive catalyst mixture includes the catalyst and the carbon body in a weight ratio of 0.5:1 to 10:1.

5. The system according to one of claims 1 to 4, wherein the carbon body includes at least one selected from the group consisting of carbon nanotubes, fullerenes, graphite, graphene, carbon black, ketjen black, and carbon fibers, and/or wherein the carbon body has π electrons in an sp² hybridized carbon network.

6. The system accordng to one of claims 1 to 5, wherein the catalyst includes at least one selected from the group consisting of ruthenium (Ru) and cesium (Cs) as a catalytically active component, and/or wherein the catalyst includes, as a catalyst support, at least one selected from the group consisting of cerium oxide, lanthanum oxide, vanadium oxide, magnesium oxide, aluminum oxide, zirconium oxide, tungsten oxide, and titanium oxide.

7. The system according to one of claims 1 to 6, wherein the microwave reactive catalyst mixture further includes silicon carbide (SiC), and/or an outer surface of the reactor is covered by silicon carbide (SiC).

8. The system according to one of claims 1 to 7, further comprising distribution plates (70, 71) each disposed between the catalyst bed (20, 21) and the distribution device (40, 41), preferably further comprising a plurality of mixed gas flow pipes (720) which are fixed to a lower surface of the distribution plate (70, 71) and through which the mixed gas flows.

9. The system according to claim 8, wherein:
the mixed gas flow pipe (720) has a bottom surface (721) and a side surface (722) connecting the bottom surface (721) with the distribution plate (70, 71),
a plurality of upper openings (723) are formed in a side surface (722) of an upper part (722a) of the mixed gas flow pipe (720) spaced apart from each other along a circumference of the pipe,
a plurality of middle openings (725) are formed in a side surface (722) of a middle part (722b) of the mixed gas flow pipe (720) spaced apart from each other along the circumference,
a plurality of lower openings (302, 727) are formed in a side surface (722) of a lower part of the mixed gas flow pipe (720) spaced apart from each other along the circumference, and
optionally the mixed gas flow pipe (720) includes a cover (730) surrounding at least some regions of the side surface (722) of the mixed gas flow pipe (720) to provide a space for a fluid flowing out of the side surface (722) of the mixed gas flow pipe (720) after passing through the upper opening (723) to be guided toward the middle opening (725), further optionally wherein the mixed gas flow pipe (720) further includes a separator plate (729) dividing the upper and middle parts (722b) of the mixed gas flow pipe (720) from each other.

10. The system of any one of claims 1 to 9, wherein each of the mixed gas supply lines (50, 51) includes a flow regulating device (52, 53).

11. The system of any one of claims 1 to 10, wherein:
each of the backflow prevention plates (30, 31) includes a plurality of openings (302), and
each of the plurality of openings (302) included in each of the backflow prevention plates (30, 31) has a backflow prevention cap (303) selectively opened based on a flow direction of the gas, preferably wherein the backflow prevention cap (303) is coupled to a hinge (304) disposed at a position on each circumference part of the plurality of openings (302) included in each of the backflow prevention plates (30, 31), optionally wherein a coupling part of the hinge (304) that is coupled to the hinge (304) includes a spring to apply an elastic force in a direction in which the backflow prevention cap (303) approaches the distribution plate (70, 71).

12. The system according to one of claims 1 to 11, further comprising a heat exchanger disposed downstream from each of the two or more catalyst beds (20, 21) to remove heat from an effluent of the catalyst bed (20, 21).

13. A method for ammonia synthesis using an ammonia synthesis system according to any one of claims 1 to 12.

14. The method of claim 13, wherein ammonia is synthesized in the ammonia synthesis system at 1 to 300 bar, and/or wherein ammonia is synthesized in the ammonia synthesis system at 200 to 700°C.

15. An ammonia synthesis system comprising:
a mixed gas supply line (50, 51) providing mixed gas including hydrogen generated from a process using renewable energy to an ammonia synthesis reactor (10);
the ammonia synthesis reactor (10);
a first and a second catalyst bed included in the ammonia synthesis reactor (10);
a first backflow prevention plate disposed downstream from the first catalyst bed for preventing a backflow of mixed gas;
a first distribution device disposed upstream from the first catalyst bed for distributing a mixed gas feed to the first catalyst bed;
a second distribution device disposed upstream from the second catalyst bed for distributing a mixed gas flow exiting the first catalyst bed to the second catalyst bed; and
first and second microwave heating devices (60, 61) for emitting microwaves to the first and second catalyst beds (20, 21) respectively,
wherein the first and second catalyst beds (20, 21) include a microwave reactive catalyst mixture including a catalyst and a carbon body,
wherein the mixed gas supply line (50, 51) includes first and second mixed gas supply lines (50, 51) arranged to supply mixed gas feed to the first and/or the second distribution devices respectively depending upon a flow rate of the mixed gas flow.
